# EUROPEAN PATENT SPECIFICATION

(11) **EP 2 966 336 B1**
(45) Date of publication and mention of the grant of the patent: **24.04.2019**
(21) Application number: 14306118.2
(22) Date of filing: 09.07.2014
(51) Int. Cl.: F16N 13/16, B65G 45/08

(54) **Lubrication injector, notably for grease injection system**
Teleskopische Schmierdüse, insbesondere für Fettinjektionssystem
Injecteur télescopique de lubrification, particulièrement pour un système d'injection de graisse

(43) Date of publication of application: 13.01.2016
(73) Proprietor: SKF Lubrication Systems France, 49400 Saumur (FR)
(72) Inventor: TISSERAND, Kilian, 49680 VIVY (FR)
(74) Representative: Casalonga

(56) References cited:
- GB-A- 919 107
- US-A- 3 156 320

## Description

The present invention relates to the fields of lubrication injectors, notably those used in grease injection systems for chain conveyors.

Chain conveyors are used in a variety of industries to move articles and require lubrication for the plates, the rollers and all the moving parts of the chain to prevent the wear.

Most grease injection systems for such conveyor are provided with a lubrication injector comprising a housing, a metering body disposed into said housing and a dispensing head mounted onto said body, and with a pneumatic cylinder disposed axially behind the lubrication injector. The pneumatic cylinder comprises a piston rod connected the housing of the lubrication injector. In use, while the pneumatic cylinder runs its stroke, the dispensing head first approaches a lubrication inlet of the chain conveyor and comes into contact with said inlet, and then delivers the grease into. The delivery of grease is obtained with a sliding of the housing on the metering body under the action of the pneumatic cylinder.

A known lubrication injector is shown in document GB 919 107 A.

The lubrication injector further comprises means for setting a stroke of the housing relative to the metering body. Said setting means, the housing and the metering body delimit together a metering chamber for the grease in communication with a supply channel of the metering body.

Generally, the setting means comprises a plug disposed on the housing and designed to obtain a first stroke of said housing in a first mounting position of said plug and a second stroke in a second reversed mounting position.

With such design, it is only possible to set two different strokes. Accordingly, it gives only two possibilities of metering of grease. Besides, with such an arrangement, it is necessary to disassemble and re-assemble a large number of components of the injector to change the volume of grease which is delivered per stroke.

One aim of the present invention is to overcome these drawbacks.

It is a particular object of the present invention to provide a lubrication injector, notably for grease injection system, having a large number of metering possibilities and which can be set in a simple way.

In one embodiment, the lubrication injector comprises a metering body provided with a lubricant supply channel and a reception body into which is mounted the metering body and carrying said metering body. Said reception body is mounted slidable axially on the metering body. The injector further comprises means for setting a stroke of the reception body relative to the metering body which are mounted on said reception body. The reception body, the metering body and the setting means delimit together a metering chamber for a lubricant in communication with the supply channel of said metering body.

The setting means are axially movable along the reception body. The axial position of the setting means is adjustable between a closed position and an approximated position relative to the metering body corresponding respectively to a minimal stroke and a maximal stroke of said reception body.

Such design gives a plurality of possibilities of metering. There is a large number of possible settings between the closed position and the approximated position of the setting means with respect to the metering body. Besides, the adjustment of the setting means is obtained with an axial movement of said means along the reception body.

Preferably, the setting means are screwed on the reception body. The setting means may comprise an outer thread cooperating with an inner thread of a bore of the reception body.

Advantageously, the setting means are accessible from the outside of said injector.

In one preferred embodiment, the setting means comprise a cavity for the insertion of an adjusting wrench.

The setting means may be mounted into a hole of the reception body extending from a frontal end surface of said body. The setting means may coaxial with the metering body.

The injector further comprises a dispensing head mounted on the metering body and comprising an outlet orifice in communication with the supply channel of said metering body, the setting means being mounted axially on the side opposite to the dispensing head with respect to the metering body.

In one embodiment, the injector further comprises a housing into which is mounted the reception body, said reception body being axially movable with respect to the housing. Preferably, the housing delimits together with the reception body a first chamber and an opposite second chamber for an actuating fluid. The reception body may comprise passage means for the lubricant in communication with the metering chamber. For example, the passage means comprise at least one hole made in the thickness of the reception body and opening into the metering chamber.

In another embodiment, the injector further comprises a mounting plate secured to the reception body and radially offset towards the outside, said plate being adapted to be connected to the piston rod of a cylinder.

Preferably, the reception body comprises a bore into which is mounted the metering body.

The invention also concerns a grease injection system for chain conveyor comprising at least one lubrication injector as previously defined.

The present invention and its advantages will be better understood by studying the detailed description of specific embodiments given by way of non-limiting examples and illustrated by the appended drawings on which:
- Figures 1 to 3 are cross-sections of a lubrication injector according to a first example of the invention in one setting position of the injector,
- Figure 4 is a cross-section of the injector of Figure 1 in another setting position,
- Figure 5 is a cross-section of the injector of Figure 1 during a setting phase,
- Figure 6 is a cross-section of a lubrication injector according to a second example of the invention in one setting position of the injector, and
- Figure 7 is a cross-section of the injector of Figure 6 in another setting position.

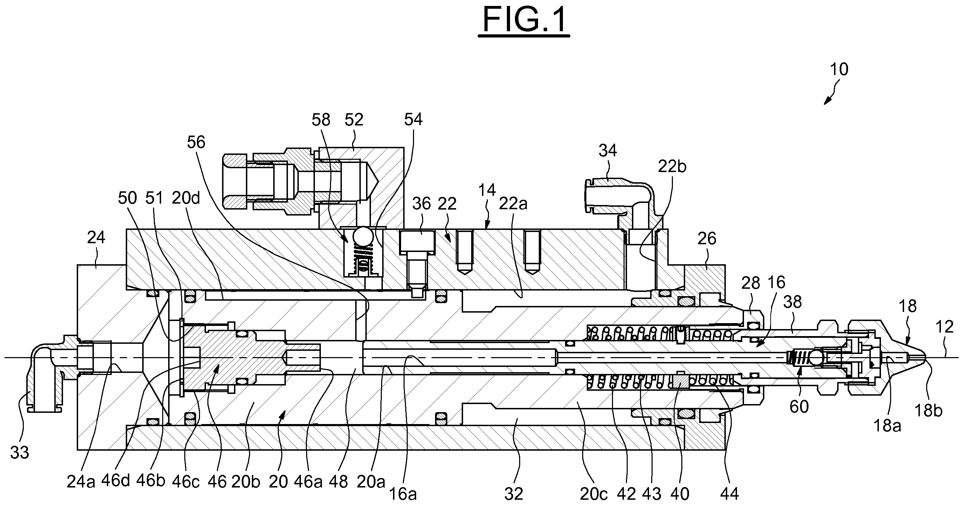

A lubrication injector 10 as shown on Figure 1 is particularly adapted for a lubricant injection system for chain conveyor. However, the injector 10 can also be used in other applications that require a limited compactness in the axial direction.

The injector 10, with an axis 12, comprises a housing 14, a metering piston or body 16 mounted into the housing, a dispensing head 18 disposed on the metering body and adapted to spray the lubricant, and an intermediate piston 20 radially interposed between said metering body and the housing. The piston 20 supports the metering body and is axially movable with respect to the housing 14 along the axis 12. The metering body 16 and the intermediate piston 20 each have a cylindrical form. The piston 20 forms a reception body for the metering body 16.

The housing 14 is provided with a tubular main body 22 and with first and second side plates 24, 26 each fixed to one end of said body. The body 22 comprises an axial annular bore 22a, coaxial with the axis 12, into which is mounted the intermediate piston 20. Said piston 20 is mounted in radial contact with the bore 22a.

The intermediate piston 20 extends longitudinally along the axis 12 and through the bore 22a of the housing. The piston 20 comprises an annular bore 20a, coaxial with the axis 12, into which is mounted the metering body 16. Said body 16 is mounted in radial contact with the bore 20a. The bore 20a extends on the entire axial length of the piston 20. The bore 20a extends axially from a frontal rear face of the piston to an opposite frontal front face. In the illustrated example, the bore 20a has a stepped form.

The intermediate piston 20 comprises a cylinder portion 20b mounted in radial contact with the bore 22a of the nut, and a rod portion 20c extending axially from a front face of said cylinder portion and having a reduced diameter. In the position shown on Figure 1, a rear face of the cylinder portion 20b which forms the rear face of the piston axially comes into contact with the side plate 24. A sleeve 28 is secured into the bore 20a of the piston and axially bears against the end of the rod portion 20c axially located on the side of the dispensing head 18.

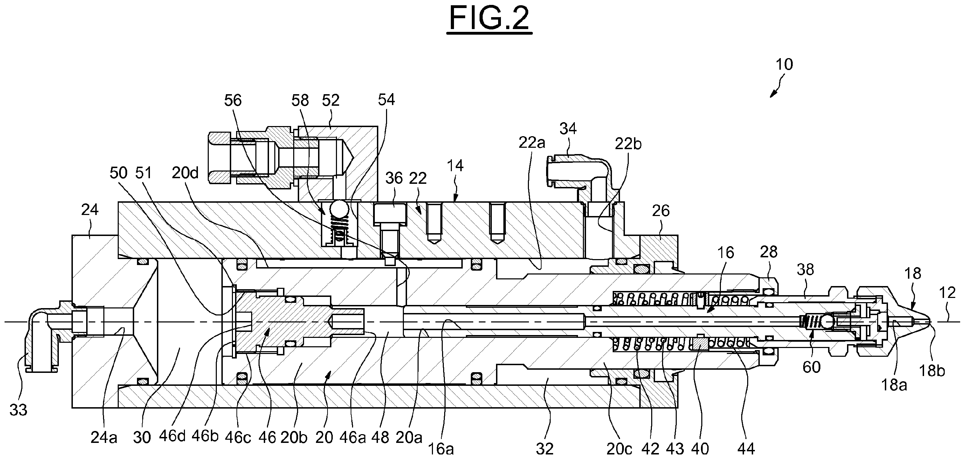

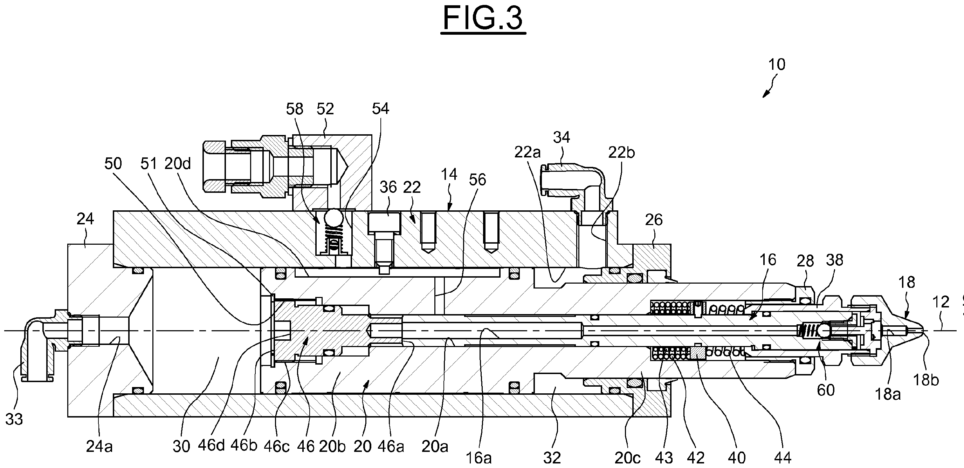

The side plate 24 and the bore 22a of the housing delimit together with the intermediate piston 20 a first chamber 30 (Figures 2 and 3). The opposite side plate 26, the bore 22a and the piston 20 delimit a second chamber 32 axially opposite to the first chamber with regard to the cylinder portion 20b of said piston. As will be described later, the piston 20 may be actuated by an external source of energy (not shown), for example a pneumatic source, in order to axially move with respect to the housing 14. To this end, the side plate 24 comprises a through-hole 24a extending axially into its thickness and opening into the chamber 30. A through-hole 22b is also provided into the thickness the body 22 and opens into the chamber 32. The hole 22b extends radially. Fittings 33, 34 are respectively mounted into the through-holes 24a, 22b to be connected to the external source.

In the illustrated example, the intermediate piston 20 comprises a longitudinal groove 20d provided on the outer surface of the cylinder portion 20b and into which extends a screw 36 mounted on the body 22 of the housing. The groove 20d and the screw 36 form guiding means of the piston 20.

The metering body 16 has a tubular shape and extends along the axis 12. The body 16 axially protrudes outwards with respect to the piston 20 and the housing 14. The body 16 comprises a supply channel 16a extending axially from a frontal rear face of said body to an opposite frontal front face. The supply channel 16a is coaxial with the axis 12.

The dispensing head 18 comprises a delivery channel 18a which communicates with the supply channel 16a of the metering body and which emerges at an outlet orifice 18b. In the illustrated example, the injector 10 also comprises an annular sleeve 38 mounted on the outer surface of the metering body 16 and supporting the dispensing head 18. The sleeve 38 is axially moveable on the body 16.

The metering body 16 comprises an abutment ring 40 secured to its outer surface and radially disposed into the bore 20a of the intermediate piston without contact with said bore. The ring 40 forms on the body 16 a protrusion extending radially outwards. Alternatively, the body 16 and the ring 40 may be made in one part. The sleeve 28 of the intermediate piston axially bears against the abutment ring 40 in the position shown on Figure 1.

The injector 10 also comprises first elastic return springs 42, 43 axially disposed between the abutment ring 40 and the intermediate piston 20. Each spring 42, 43 is disposed inside a closed space delimited by the bore of piston 20 and the metering body 16. A first end of each spring 42, 43 axially bears against the piston 20 and a second opposite end axially bears against the ring 40. Each spring 42, 43 is coaxial with the axis 12. In the illustrated example, each spring 42, 43 is a compression spring.

The injector 10 further comprises a second elastic return spring 44 axially disposed on the side opposite to the return spring 42, 43 with regard to the abutment ring 40. The spring 44 is axially disposed between the ring 40 and the sleeve 38 of the metering body 16. The spring 44 is disposed inside the bore of the sleeve 28 of the piston. A first end of the spring 44 axially bears against the sleeve 38 and a second opposite end axially bears against the ring 40. The spring 44 is coaxial with the axis 12. In the illustrated example, the spring 44 is a compression spring.

The injector 10 further comprises a plug 46 mounted into the bore 20a of the intermediate piston axially on the side opposite to the dispensing head 18 with respect to the metering body 16. In the position shown on Figure 1, the plug 46 is axially spaced apart from the metering body 16. The plug 46 and the body 16 delimit into the bore 20a an interior tight metering chamber 48 for a lubricant to deliver (not shown). The lubricant may be grease or oil. The chamber 48 is delimited axially by the frontal rear face of the body 16 and a frontal front face 46a of the plug. As will be described later, the axial position of the plug 46 into the bore 20a of the piston is axially adjustable for setting a stroke of said piston relative to the metering body 16.

The plug 46 is delimited axially by the front face 46a and by an opposite frontal rear face 46b. In the position shown on Figure 1, the rear face 46b of the plug abuts axially against a retaining ring 51, for example a circlips, which is mounted into the bore 20a of the piston. In the illustrated example, the plug 46 comprises a stepped outer surface. The plug 46 comprises an outer thread 46c provided on its outer surface and which engages with an inner thread 50 formed on the bore 20a of the piston. The plug 46 is screwed on the piston 20 and is coaxial to the axis 12. The plug 46 further comprises a cavity 46d formed on the rear face 46b. In the illustrated example, the cavity 46d extends axially and is coaxial to the axial 12. The cavity 46d has here a hexagonal shape. As will be described later, the cavity 46d is used to set the axial position of the plug 46 on the piston 20.

The plug 46 and the bore 20a of the piston delimit together with the body 16 the metering chamber 48. The chamber 48 is in communication with the supply channel 16a of the metering body. The chamber 48 is located at the entrance of the supply channel 16a. Passage means are provided for the lubricant to pass from an external circuit (not shown) to the metering chamber 48 in order to fill said chamber and the supply channel 16a of the metering body. The circuit for the delivery of the lubricant may comprise a circulation pump and is connected to a fitting 52 mounted on the outer surface of the housing 14.

In the illustrated example, these passage means are of several type. Firstly, there is a radial through-hole 54 made in the thickness of the housing 14. The hole 54 extends from the outer surface of the body 22 of the housing and opens into the bore 22a. Secondly, other passage means for the introduction of the lubricant inside the metering chamber 48 consist in a radial through-hole 56 made in the thickness of the piston 20. The hole 56 extends from the outer surface of the piston 20 and opens into the metering chamber 48. The hole 56 communicates with the hole 54 of the housing.

The housing 14 further comprises opening and closing means 58 adapted to close off the hole 54 when no lubricant is delivered by the circulation pump and to open said hole when said lubricant is delivered. In the disclosed embodiment, the opening and closing means 58 comprises a ball and a spring applying a permanent radial force on the ball to urge it against a supply conduit of the fitting 52.

The injector 10 also comprises opening and closing means 60 adapted to close off the supply channel 16a of the metering body. Under the effect of the pressure applied by the lubricant inside the channel 16a, said channel is closed. In the disclosed embodiment, the opening and closing means 60 are mounted into the supply channel 16a of the body and comprises a ball and a spring applying a permanent axial force on the ball to urge said ball against a plug of the dispensing head.

In use, from the position shown on Figure 1, the piston 20 is actuated by the external source of energy which conveys a fluid into the hole 24a and the chamber 30 of the housing. With the effect of the pressure applied by the fluid on the rear face of the piston 20, said piston moves axially jointly with the metering body 16 towards the outside. The piston 20 and the metering body 16 moves axially together until the dispensing head 18 comes into contact with a lubrication inlet of the chain conveyor (not shown) to lubricate. During this first approach step, the piston 20 axially drives the metering body 16 as shown on Figure 2. There is no axial relative movement between the body 16 and the piston 20.

With the contact between the dispensing head 18 of the injector and the chain conveyor, the collar 38 supporting said head axially moves on the metering body 16 towards the piston 20 since the fluid still exerts a pressure on the rear face of the piston and some lubricant already fills the supply channel 16a of the metering body. The spring 44 is axially compressed between the ring 40 of said body and the collar 38. The means 60 opens the supply channel 16a of the metering body.

Then, the piston 20 axially slides on the metering body 16 towards the head 18 under the pressure applied on said piston. The piston 20 axially translates with respect to the body 16 until the plug 46 axially abuts against said body as shown on Figure 3. The front face 46a of the plug axially comes into contact against the rear face of the body 18. The elastic springs 42, 43 are axially compressed between the ring 40 and piston 20.

During the axial movement of the piston 20 on the body 16, the volume of the metering chamber 48 is reduced. The plug 46 of the piston exerts an axial pressure on the lubricant located into the chamber 48 which is conveyed inside the supply channel 16a of the metering body. This leads to a dispersing of the lubricant already present into said supply channel.

Then, the external source of energy conveys the fluid into the chamber 32 of the housing and not anymore into the chamber 30. With the effect of the pressure applied by the fluid on the front face of the cylinder portion 20b of the piston, said piston moves axially jointly with the metering body 16 towards the inside of the housing 14. Simultaneously, since the dispensing head 18 is not anymore in contact with the chain conveyor, the spring 44 releases the stored energy during the compression and exerts an axial force on the sleeve 38 which axially slides on the metering body 16 towards the outside. The means 60 close the supply channel 16a of the metering body with such translation. The springs 42, 43 also release the stored energy and exert an axial force on the ring 40 of the metering body. Said body 16 axially slides into the bore 20a of the piston towards the outside. Thus, the rear face of the metering body 16 is axially spaced apart from the plug 46 of the piston and the metering chamber 48 recovers its initial volume. The external source of energy is then stopped when the piston 20 abuts against the side plate 24 as shown in the position illustrated on Figure 1.

The axial position of the plug 46 relative to the piston 20 as shown on Figure 1 defines a maximal stroke of said piston. In this approximated position of the plug 46 relative to the metering body 16, the metering chamber 48 has a maximal length. This leads to a maximal metering of grease.

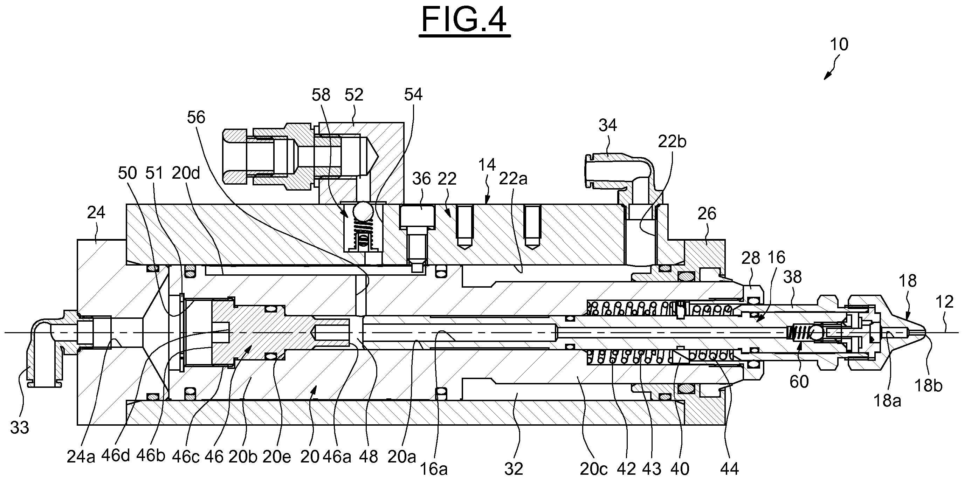

To obtain a minimal metering of grease, the plug 46 is axially moved inwards into the bore 20a of the piston towards the metering body 16 to come into axial contact with a radial shoulder 20e of said bore as shown on Figure 4. The plug 46 is in a closed position relative to the metering body 16. This axial position of the plug 46 defines a minimal stroke of the piston 20 on the body 16. In this position, the metering chamber 48 has a minimal length. The axial space between the rear face of the body 16 and the front face 46a of the plug is reduced with regard to the previous setting as shown on Figure 1.

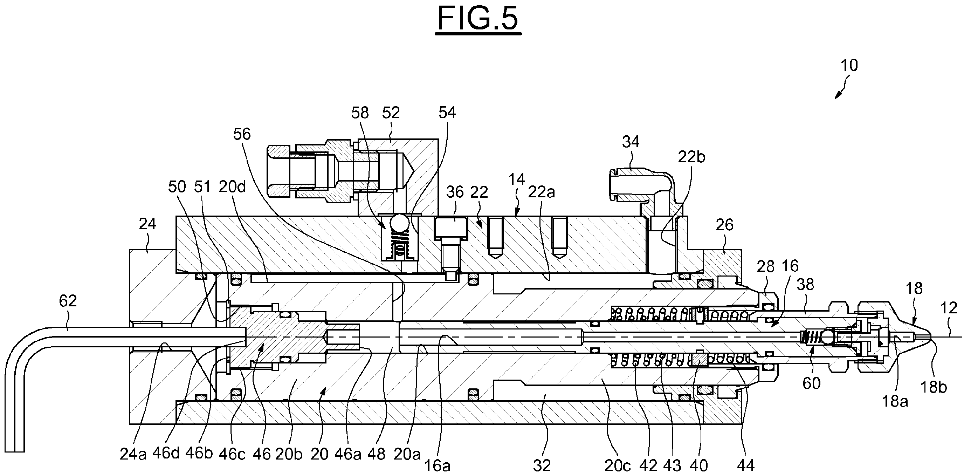

The position of the plug 46 on the piston 20 is axially adjustable between the closed position and the approximated position relative to the metering body 16. The setting of the plug 46 is adjusted by screwing said plug into the bore 20a of the piston. The plug 46 is axially movable along the bore 20a of the piston. To this end, a wrench 62 (Figure 5) is used and inserted into the hole 24a of the housing and into the cavity 46d. The plug 46 is accessible from the outside of the injector 10. The wrench 62 and the cavity 46d have a complementary shape. Before the insertion of the wrench 62 into the injector, it is only necessary to remove the fitting 33.

The plug 46 may be located at any axial position between the approximated position and the closed position with regard to the metering body 16 according to the desired metering of grease. Advantageously, the outer thread 46c of the plug may have a predetermined helix angle to obtain for each complete rotation of said plug a defined metering of grease.

Otherwise, the disposition of the intermediate piston 20 mounted inside the housing 14 of the injector and the mounting of the metering body 16 into the piston enable to limit the axial compactness of said injector. The total length of the injector is limited with the piston 20 and the metering body 16 which are axially nested into the housing 14. Otherwise, the injector is easily adaptable to the configuration of the chain conveyor. A first type of chain conveyor is called "chain conveyor moving to the right" and a second type is called "chain conveyor moving to the left". The mounting of each plate either on one side or on the other side of the housing is chosen according to the type of the associated chain conveyor.

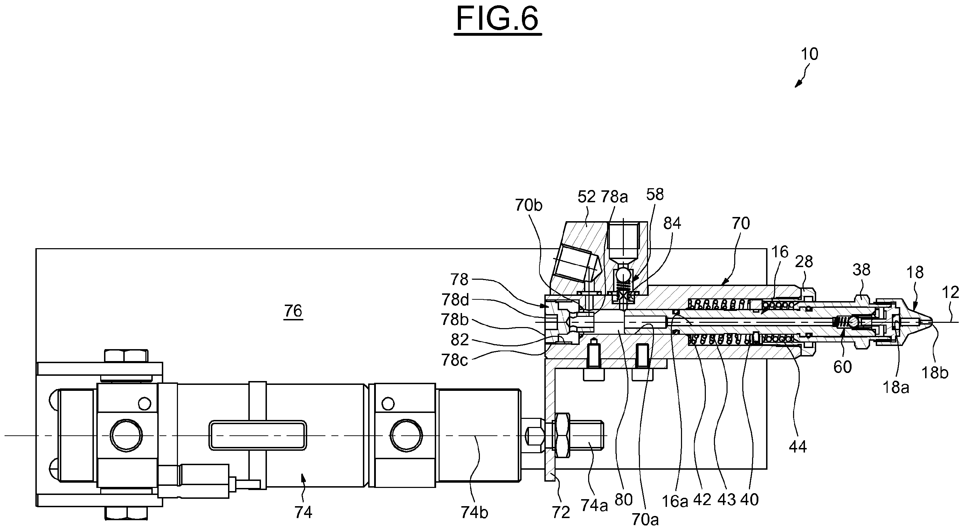

The second example illustrated on Figure 6, in which identical parts are given identical references, mainly differs from the first example in that the injector 10 is deprived of intermediate piston. In this example, the metering body 16 is mounted directly into a housing 70. The housing 70 forms a reception body for the metering body 16.

The housing 70 extends longitudinally along the axis 12. The housing 70 comprises an annular bore 70a, coaxial with the axis 12, into which is mounted the metering body 16. Said body 16 is mounted in radial contact with the bore 70a. The bore 70a extends on the entire axial length of the housing 70. The bore 70a extends axially from a frontal rear face of the housing to an opposite front face. In the illustrated example, the bore 70a has a stepped form. The springs 42 to 44 and the ring 40 are located into the bore 70a of the housing.

The injector 10 comprising a mounting plate 72 secured to the housing 70 and extending radially outwards. The mounting plate 72 is radially offset towards the outside with regard to the housing 70. The plate 72 is secured to the outer surface of the housing 70 by any appropriate means, here by screws. The mounting plate 72 is fixed to the piston rod 74a of a pneumatic cylinder 74 external to the injector. The piston rod 74a extends along an axis 74b parallel and radially offset with regard to the axis 12. The pneumatic cylinder 74 is radially offset with regard to the housing 70. The cylinder 74 is secured to a base 76 and supports the injector 10.

The injector 10 further comprises a plug 78 mounted into the bore 70a of the housing axially on the side opposite to the dispensing head 18 with respect to the metering body 16. The plug 78 and the body 16 delimit into the bore 70a an inner tight metering chamber 80. The chamber 80 is delimited axially by the frontal rear face of the body 16 and a frontal front face 78a of the plug. The plug 78 is delimited axially by the front face 78a and by an opposite frontal rear face 78b. In the position shown on Figure 6, the rear face 78b of the plug axially flushes with the rear face of the metering body 16. In the illustrated example, the plug 78 comprises a stepped outer surface. The plug 78 comprises an outer thread 78c provided on its outer surface and which engages with an inner thread 82 formed on the bore 70a of the housing. The plug 78 is screwed on the housing 70 and is coaxial to the axis 12. The plug 78 further comprises a cavity 78d formed on the rear face 78b and adapted to receive an adjusting wrench in order to set the axial position of the plug on the housing 70.

The plug 78 and the bore 70a of the housing delimit together with the metering body 16 the metering chamber 80. The chamber 80 is in communication with the supply channel 16a of the metering body. The chamber 80 is located at the entrance of the supply channel 16a. Passage means are provided for the lubricant to pass from an external circuit (not shown) connected to the fitting 52 of the housing to the metering chamber 80 in order to fill said chamber and the supply channel 16a of the metering body. In the illustrated example, these passage means comprise a radial through-hole 84 made in the thickness of the housing 70. The hole 84 extends from the outer surface of the housing 70 and opens into the bore 70a.

In use, from the position shown on Figure 1, the injector 10 is actuated axially by the pneumatic cylinder 74. The rod 74a of the cylinder connected to the mounting plate 72 moves axially outwards. The housing 70 and the metering body 16 moves axially together until the dispensing head 18 comes into contact with the lubrication inlet of the chain conveyor to lubricate. During this first approach step, there is no axial relative movement between the body 16 and the housing 70. With the contact between the dispensing head 18 of the injector and the chain conveyor, the collar 38 supporting said head axially moves on the metering body 16 towards the housing 70. The spring 44 is axially compressed between the ring 40 of said body and the collar 38. The means 60 opens the supply channel 16a of the metering body.

Then, the housing 70 axially slides on the metering body 16. towards the head 18 under the force applied by the pneumatic cylinder. The housing 70 axially translates with respect to the body 16 until the plug 78 axially abuts against said body. The front face 78a of the plug axially comes into contact against the rear face of the body 18. The elastic springs 42, 43 are axially compressed between the ring 40 and housing 70. The axial movement of the housing 70 on the body 16 leads to a dispersing of the lubricant already present into the supply channel 16 of said body.

Then, the rod 74a of the cylinder moves axially inwards to return to its initial position. The housing 70 moves axially jointly with the metering body 16. Simultaneously, the sleeve 38 which axially slides on the metering body 16 towards the outside under the effect of the spring 42 and the means 60 close the supply channel 16a of the metering body with such translation. The metering body also slides into the bore 70a of the housing towards the outside under the effect of the springs 42, 43. Thus, the rear face of the metering body 16 is axially spaced apart from the plug 78 and the metering chamber 80 recovers its initial volume.

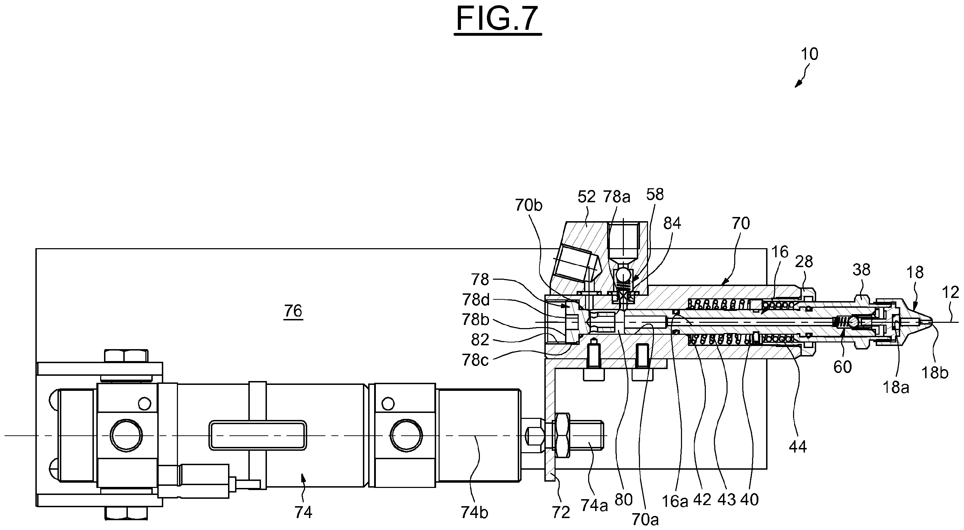

Similarly to the first example, the axial position of the plug 78 into the bore 70a of the housing is axially adjustable for setting the stroke of said housing relative to the metering body 16. The axial position of the plug 78 with regard to the housing 70 as shown on Figure 6 defines a maximal stroke of said housing and the position as shown on Figure 7 of said plug defines a minimal stroke. In the illustrated example, the plug 78 bears axially against a radial shoulder 70b of the bore of the housing in the closed position with regard to the metering body 16.

Although the invention has been illustrated on the basis of a lubrication injector having translating setting means which are axially movable along the reception body, i.e. the piston or the housing, by screwing in order to set the stroke of said body, it should be understood that the invention can be applied with translating setting means having another design, for example a plurality of ribs provided on its outer surface, axially spaced apart one relative to another and adapted to cooperate with corresponding grooves formed on the reception body to obtain a plurality of metering positions.

## Claims

1. Lubrication injector comprising a metering body (16) provided with a lubricant supply channel (16a) and a reception body (20; 70) into which is mounted the metering body and carrying said metering body, said reception body being mounted slidable axially on the metering body, the injector further comprising means (46; 78) for setting a stroke of the reception body (20; 70) relative to the metering body (16) which are mounted on said reception body, and a dispensing head (18) mounted on the metering body (16) and comprising an outlet orifice (18b) in communication with the supply channel (16a) of said body, the reception body (20; 70), the metering body (16) and the setting means (46; 78) delimiting together a metering chamber (48; 80) for a lubricant in communication with the supply channel (16a) of said metering body, the setting means (46; 78) being axially movable along the reception body (20; 70), the axial position of said setting means being adjustable between a closed position and an approximated position relative to the metering body (16) corresponding respectively to a minimal stroke and a maximal stroke of said reception body, **characterized in that** the lubricant supply channel (16a) of the metering body (16) extends axially from a frontal rear face to an opposite frontal front face of said body, the metering chamber (48) being located at the entrance of the supply channel, the setting means (46; 78) being mounted axially on the side opposite to the dispensing head with respect to the metering body, the reception body (20; 70) being able to slide axially on the metering body (16) towards the dispensing head (18) to reduce the volume of the metering chamber (48).

2. Injector according to claim 1, wherein the setting means (46; 78) are screwed on the reception body (20; 70).

3. Injector according to claim 2, wherein the setting means (46; 78) comprises an outer thread (46c; 78c) cooperating with an inner thread (50; 82) of a bore of the reception body (20; 70).

4. Injector according to any of the preceding claims, wherein the setting means (46; 78) are accessible from the outside of said injector.

5. Injector according to any of the preceding claims, wherein the setting means (46; 78) comprise a cavity (46d; 78d) for the insertion of an adjusting wrench.

6. Injector according to any of the preceding claims, wherein the setting means (46; 78) are mounted into a hole of the reception body (20; 70) extending from a frontal end surface of said body.

7. Injector according to any of the preceding claims, wherein the setting means (46; 78) are coaxial with the metering body (16).

8. Injector according to any of the preceding claims, further comprising a housing (14) into which is mounted the reception body (20), said reception body being axially movable with respect to the housing.

9. Injector according to claim 8, wherein the housing (14) delimits together with the reception body (20) a first chamber (30) and an opposite second chamber (32) for an actuating fluid.

10. Injector according to claim 8 or 9, wherein the reception body (20) comprises passage means for the lubricant in communication with the metering chamber (48).

11. Injector according to claim 10, wherein the passage means comprise at least one hole (56) made in the thickness of the reception body (20) and opening into the metering chamber (48).

12. Injector according to any of the preceding claims 1 to 7, further comprising a mounting plate (72) secured to the reception body (70) and radially offset towards the outside, said plate being adapted to be connected to the piston rod of a cylinder.

13. Injector according to any of the preceding claims, wherein the reception body (20; 70) comprises a bore (20a) into which is mounted the metering body (16).

14. Grease injection system for chain conveyor comprising at least one lubrication injector according to any of the preceding claims.

## Patentansprüche

1. Schmiermittelinjektor, umfassend einen Dosierkörper (16), der mit einem Schmiermittelversorgungskanal (16a) ausgestattet ist, und einen Aufnahmekörper (20; 70), in dem der Dosierkörper montiert ist und der den Dosierkörper trägt, wobei der Aufnahmekörper axial verschiebbar an dem Dosierkörper montiert ist, wobei der Injektor ferner Elemente (46; 78) zum Einstellen eines Hubs des Aufnahmekörpers (20; 70) relativ zu dem Dosierkörper (16) umfasst, die an dem Aufnahmekörper montiert sind, und einen Abgabekopf (18), der an dem Dosierkörper (16) montiert ist und eine Auslassöffnung (18b) umfasst, die sich im Austausch mit dem Versorgungskanal (16a) des Körpers befindet, wobei der Aufnahmekörper (20; 70), der Dosierkörper (16) und die Einstellelemente (46; 78) gemeinsam eine Dosierkammer (48; 80) für ein Schmiermittel im Austausch mit dem Versorgungskanal (16a) des Dosierkörpers begrenzen, wobei die Einstellelemente (46; 78) entlang des Aufnahmekörpers (20; 70) axial bewegbar sind, die axiale Position der Einstellelemente zwischen einer geschlossenen Position und einer relativ zu dem Dosierkörper (16) angenäherten Position, die einem minimalen Hub bzw. einem maximalen Hub des Aufnahmekörpers entspricht, einstellbar sind, **dadurch gekennzeichnet, dass** sich der Schmiermittelversorgungskanal (16a) des Dosierkörpers (16) axial von einer frontalen hinteren Oberfläche zu einer gegenüberliegenden frontalen vorderen Oberfläche des Körpers erstreckt, wobei sich die Dosierkammer (48) am Eingang des Versorgungskanals befindet, die Einstellelemente (46; 78) mit Bezug auf den Dosierkörper axial auf der Seite montiert sind, die dem Abgabekopf gegenüberliegt, und der Aufnahmekörper (20; 70) in der Lage ist, auf dem Dosierkörper (16) axial in Richtung des Abgabekopfs (18) verschoben zu werden, um das Volumen der Dosierkammer (48) zu reduzieren.

2. Injektor nach Anspruch 1, wobei die Einstellelemente (46; 78) auf den Aufnahmekörper (20; 70) geschraubt sind.

3. Injektor nach Anspruch 2, wobei die Einstellelemente (46; 78) ein Außengewinde (46c; 78c) umfassen, das mit einem Innengewinde (50; 82) einer Öffnung des Aufnahmekörpers (20; 70) zusammenwirkt.

4. Injektor nach einem der vorangehenden Ansprüche, wobei die Einstellelemente (46; 78) von der Außenseite des Injektors zugänglich sind.

5. Injektor nach einem der vorangehenden Ansprüche, wobei die Einstellelemente (46; 78) einen Hohlraum (46d; 78d) für das Einsetzen eines Einstellschlüssels umfassen.

6. Injektor nach einem der vorangehenden Ansprüche, wobei die Einstellelemente (46; 78) in einem Loch des Aufnahmekörpers (20; 70) montiert sind, das sich von einer frontalen Abschlussoberfläche des Körpers erstreckt.

7. Injektor nach einem der vorangehenden Ansprüche, wobei die Einstellelemente (46; 78) koaxial zu dem Dosierkörper (16) verlaufen.

8. Injektor nach einem der vorangehenden Ansprüche, der ferner ein Gehäuse (14) umfasst, in dem der Aufnahmekörper (20) montiert ist, wobei der Aufnahmekörper in Bezug auf das Gehäuse axial bewegbar ist.

9. Injektor nach Anspruch 8, wobei das Gehäuse (14) zusammen mit dem Aufnahmekörper (20) eine erste Kammer (30) und eine gegenüberliegende zweite Kammer (32) für ein Betätigungsfluid begrenzt.

10. Injektor nach Anspruch 8 oder 9, wobei der Aufnahmekörper (20) ein Durchlaufmittel für das Schmiermittel im Austausch mit der Dosierkammer (48) umfasst.

11. Injektor nach Anspruch 10, wobei das Durchlaufmittel mindestens ein Loch (56) umfasst, das in der Dicke des Aufnahmekörpers (20) ausgeführt ist und sich in die Dosierkammer (48) öffnet.

12. Injektor nach einem der vorangehenden Ansprüche 1 bis 7, der ferner eine Montageplatte (72) umfasst, die an dem Aufnahmekörper (70) gesichert und in Richtung der Außenseite radial versetzt ist, wobei die Platte dazu ausgelegt ist, mit der Kolbenstange eines Zylinders verbunden zu werden.

13. Injektor nach einem der vorangehenden Ansprüche, wobei der Aufnahmekörper (20; 70) eine Öffnung (20a) umfasst, in welcher der Dosierkörper (16) montiert ist.

14. Fettinjektionssystem für einen Kettenförderer, das mindestens einen Schmiermittelinjektor nach einem der vorangehenden Ansprüche umfasst.

## Revendications

1. Injecteur de lubrification comprenant un corps de dosage (16) pourvu d'un canal d'alimentation en lubrifiant (36a) et un corps de réception (20; 70) dans lequel le corps de dosage est monté et qui supporte ledit corps de dosage, ledit corps de réception étant monté de façon à pouvoir coulisser axialement sur le corps de dosage, l'injecteur comprenant en outre des moyens (46; 78) pour régler une course du corps de réception (20; 70) par rapport au corps de dosage (16) qui sont montés sur ledit corps de réception, le corps de réception (20; 70), le corps de dosage (16) et les moyens de réglage (46; 78) délimitant ensemble une chambre de dosage (48; 80) pour un lubrifiant en communication avec le canal d'alimentation (36a) dudit corps de dosage, les moyens de réglage (46; 78) étant déplaçables axialement le long du corps de réception (20; 70), la position axiale desdits moyens de réglage étant réglable entre une position fermée et une position rapprochée par rapport au corps de dosage (16) qui correspondent respectivement à une course minimale et une course maximale dudit corps de réception,
**caractérisé en ce que** le canal d'alimentation en lubrifiant (16a) du corps de dosage (16) s'étend axialement à partir d'une face arrière frontale jusqu'à une face avant frontale opposée dudit corps, la chambre de dosage (48) étant située à l'entrée du canal d'alimentation, les moyens de réglage (46; 78) étant montés axialement sur le côté opposé à la tête de distribution par rapport au corps de dosage, le corps de réception (20; 70) étant capable de glisser axialement sur le corps de dosage (16) en direction de la tête de distribution (18) afin de réduire le volume de la chambre de dosage (48).

2. Injecteur selon la revendication 1, dans lequel les moyens de réglage (46; 78) sont vissés sur le corps de réception (20; 70).

3. Injecteur selon la revendication 2, dans lequel les moyens de réglage (46; 78) comprennent un filet extérieur (46c; 78c) qui coopère avec un filet intérieur (50; 82) d'un alésage du corps de réception (20; 70).

4. Injecteur selon l'une quelconque des revendications précédentes, dans lequel les moyens de réglage (46; 78) sont accessibles depuis l'extérieur dudit injecteur.

5. Injecteur selon l'une quelconque des revendications précédentes, dans lequel les moyens de réglage (46; 78) comprennent une cavité (46d; 78d) pour l'insertion d'une clé de réglage.

6. Injecteur selon l'une quelconque des revendications précédentes, dans lequel les moyens de réglage (46; 78) sont montés dans un trou du corps de réception (20; 70) qui s'étend à partir d'une surface d'extrémité frontale dudit corps.

7. Injecteur selon l'une quelconque des revendications précédentes, dans lequel les moyens de réglage (46; 78) sont coaxiaux au corps de dosage (16).

8. Injecteur selon l'une quelconque des revendications précédentes, comprenant en outre un boîtier (14) dans lequel le corps de réception (20) est monté, ledit corps de réception étant déplaçable axialement par rapport au boîtier.

9. Injecteur selon la revendication 8, dans lequel le boîtier (14) délimite de concert avec le corps de réception (20) une première chambre (30) et une seconde chambre opposée (32) pour un fluide d'actionnement.

10. Injecteur selon la revendication 8 ou 9, dans lequel le corps de réception (20) comprend des moyens de passage pour le lubrifiant en communication avec la chambre de dosage (48).

11. Injecteur selon la revendication 10, dans lequel les moyens de passage comprennent au moins un trou (56) pratiqué dans l'épaisseur du corps de réception (20) et une ouverture dans la chambre de dosage (48).

12. Injecteur selon l'une quelconque des revendications précédentes 1 à 7, comprenant en outre une plaque de montage (72) qui est fixée au corps de réception (70) et qui est décalée radialement en direction de l'extérieur, ladite plaque étant adaptée pour être connectée à la tige de piston d'un cylindre.

13. Injecteur selon l'une quelconque des revendications précédentes, dans lequel le corps de réception (20; 70) comprend un alésage (20a) dans lequel le corps de dosage (16) est monté.

14. Système d'injection de graisse pour un convoyeur à chaîne comprenant au moins un injecteur de lubrification selon l'une quelconque des revendications précédentes.
